# EUROPEAN PATENT SPECIFICATION

(11) **EP 2 978 596 B1**
(45) Date of publication and mention of the grant of the patent: **30.05.2018**
(21) Application number: 14721969.5
(22) Date of filing: 21.03.2014
(51) Int. Cl.: B29D 30/16, B29D 30/30, B29D 30/44, B29D 30/46

(54) **PROCESS AND APPARATUS FOR MANUFACTURING TYRES FOR VEHICLE WHEELS**
VERFAHREN UND VORRICHTUNG ZUR HERSTELLUNG VON REIFEN FÜR FAHRZEUGRÄDER
PROCÉDÉ ET APPAREIL DE FABRICATION DE PNEUS POUR ROUES DE VÉHICULE

(30) Priority: 28.03.2013 IT MI20130471
(43) Date of publication of application: 03.02.2016
(73) Proprietor: Pirelli Tyre S.p.A., 20126 Milano (IT)
(72) Inventor: BADOLATO, Luigi Antonio, I-20126 Milano (IT); BOSIO, Gian Luigi, I-20126 Milano (IT); PORTINARI, Gianni, I-20126 Milano (IT)
(74) Representative: Brasca, Marco
(86) International application number: PCT/IB2014/060022
(87) International publication number: WO 2014/155258

(56) References cited:
- EP-A1- 1 867 467
- EP-A1- 2 431 164
- DE-A1- 2 740 609
- US-A1- 2009 293 267

## Description

### Field of the art

The present invention has as object a process and an apparatus for manufacturing tyres for vehicle wheels. The invention in particular refers to an apparatus and a process capable of managing the continuous elongated elements intended to form components of the tyre in a manner such to prevent damaging deformations of the same before assembly and thus to ensure the quality of the produced tyres.

### State of the art

A tyre for vehicle wheels generally comprises a carcass structure comprising at least one carcass ply having respectively opposite end flaps engaged with respective annular anchoring structures, generally termed "bead cores", integrates in the zones usually identified with the name "beads", having an inner diameter substantially corresponding with a so-called "fitting diameter" of the tyre on a respective mounting rim. The tyre also comprises a belt structure comprising at least one belt layer situated in radially outer position with respect to the carcass structure and a tread band that is radially outer with respect to the belt structure. The tyre can comprise further components, such as under-liner, liner, fillers in the bead zone, sidewalls, inserts of the sidewalls in the self-supporting tyres, antiabrasive inserts, underlayer, bead reinforcement layers (flippers), bead protection layers (chafers).

The building of the tyres can be carried out by means of assembly of the respective components, depositing the semi-finished products on forming drums. By "component" of the tyre it is intended any functional component of the tyre (for example under-liner, liner, carcass ply/plies, fillers in the bead zone; belt layer(s), sidewalls, inserts of the sidewalls in the self-supporting tyres, antiabrasive inserts, underlayer, tread band, bead reinforcement and protection layers, etc.) or a portion thereof.

By "semi-finished product" it is intended an elongated element, made of only elastomeric material or comprising further structural elements, supplied on a forming drum in order to form a component of the tyre. The semi-finished product is preferably defined by a continuous elongated element shaped as a strip with a flattened section, the further structural elements comprise one or more textile or metallic reinforcement cords. Such textile or metallic reinforcement cords are preferably arranged parallel to each other and inclined with respect to the longitudinal direction of the elongated element itself. Said continuous elongated element is preferably supplied in a circumferential sense on a forming drum, for example by a reel or by an extruder. Preferably said semi-finished product is cut to size before the supply on the forming drum.

With the term "elastomeric material", it is intended to indicate a material obtained by means of mixing of at least one elastomeric polymer and at least one reinforcement filler. Preferably, such material also comprises additives such as, for example, a cross-linking agent and/or a plasticising agent. Due to the presence of the cross-linking agent, by means of heating such material can be cross-linked, so as to form the final manufactured product.

The document WO 2013/011396, on behalf of the same Applicant, illustrates an apparatus for building tyres for vehicle wheels wherein one forming drum at a time is loaded on a shuttle movable on a guide along a line of deposition. The shuttle is moved along the guide in both travel senses in order to successively bring it to stations for supplying the elongated elements. At each of the supply stations, one or more elongated elements are advanced on flat and tilted transport surfaces, cut to size and wound on a radially outer surface of the forming drum carried by the shuttle.

The document WO 2005/087481 illustrates a cutting device for cutting a belt layer from a non-vulcanised rubber strip provided with inclined parallel cords. The device comprises a blade freely movable in a lateral direction with respect to the cutting direction, a sensor for detecting a lateral movement of the blade, a calculator that provides control instructions based on the lateral movement and an actuator for adjusting the cutting direction on the basis of the control instructions. The document US2009/0126874 illustrates a feed device for a drum for building tyres. The feed device comprises two pairs of cutting devices arranged one on top of the other and each assigned to a conveyor belt. The cutting devices are movable with respect to the conveyor belts in a manner so as to bring into active contact one of the two pairs of cutting devices or the other.

The document US2006/0130958 illustrates a device for forming a reinforcement layer of a tyre on an outer surface of a drum. The device comprises means for transporting strips of reinforced material towards the drum, such material provided with a plurality of parallel cords covered with rubber, means for cutting the material obliquely with respect to a transverse direction, a first and a second conveyance path placed downstream of the cutting means for guiding the material towards one side of the drum or the other in the peripheral direction of the drum itself.

Other devices for cutting a rubber strip that is reinforced then wound on a drum for building tyres are described for example in documents US6547906, US5820726, US4457802, US3989565, EP1902819.

The document DE2740609 illustrates a device for manufacturing tyres by means of deposition of elastomeric layers on a building drum comprising an auxiliary drum, which can be placed in contact with the building drum, and a fixed support. A two-part support device is situated above the fixed support in a manner so as to be able to be tangentially moved with respect to the auxiliary drum. The support device has its lower side directed towards the elastomeric layer and capable of lifting the front end of the layer from the support and transporting it towards the building drum. A knife is provided for the cutting of the belt into the required length. The knife is movable along a vertical direction and, in a rest position of the support device, it is moved downwards against the support through the slit formed between the two parts of said support device.

Document EP 2 431 164 discloses a tire producing apparatus including supply means that supplies a tire constituting member along a longitudinal direction and rotating means of a support body, for forming an unvulcanized tire by winding the tire constituting member around the rotating support body. The apparatus comprises: detection means that detects the joint portions of the tire constituting member; cutting means that cuts the tire constituting member into a length wound around the support body; front end holding attaching means and rear end holding attaching means that respectively hold and attach a front end portion and a rear end portion of the wound tire constituting member to the support body.

Document EP 1 867 467 discloses a method of applying a carcass reinforcing ply by rolling a carcass reinforcement sheet on a rotating cylindrical drum. The method comprises releasing the sheet in a direction of a surface of the drum at a linear speed equal to a circumferential speed of a first laying surface by exerting a radial pressure on the reinforcing sheet, gripping front and back edges of the reinforcement sheet using a carrier to maintain carcass reinforcing threads parallel to an axial direction, laying the front and back edges of the sheet on the drum at a meridian line.

Document DE 27 40 609 discloses a device for building tyres carcasses having a tyre building drum and an intermediate support in the form of a cylinder which may be brought into rolling contact with the tyre building drum. The cylinder is provided with a length measuring device and with holders which are connectible to a source of partial pressure and adjustable about the periphery of the cylinder. Cylinder permits a slip-free feeding of layers and accurates transfer of the layers in a tension free manner.

Document US 2009/293267 discloses a device for manufacturing a cut-to-length pre-assembly for a tyre, wherein in the pre-assembly first and second side walls are situated on either side of an inner liner. The device comprises a supply conveyor for conveying the cut pre-assembly to the building drum.

### Object of the invention

The Applicant has observed that the quality of the tyres produced and built on the forming drum depends on the quality of the elongated elements which in turn depends on the correct management of said elongated elements by the devices placed upstream of the drum, i.e. the supply, cutting and transport devices, like those described in the abovementioned prior art documents.

In particular, the Applicant has observed that the shape of the elongated elements and their spatial position on the forming drum depend on the operations correlated with the execution of the cutting to size of the same, i.e. on the correct positioning of the elongated element below the cutting blade, before and during the cutting itself, and on the subsequent movement of the two cut edges.

In particular, the Applicant has observed that in the known devices, the elongated elements risks being cut along an incorrect line, which generates edges that do not meet design requirements.

The Applicant has also observed that, if the elongated elements comprise reinforcement wires, usually metallic or textile, inclined with respect to the longitudinal extension of the elongated element itself, an incorrect positioning can mean that the blade comes to cut one of said wires. If the wire is cut, the structural integrity of the component formed with the elongated element piece is compromised and hence the integrity of the tyre is compromised. If instead the wire is particularly strong, such as a metallic wire, it is possible that the cutting is not at all executed and the apparatus must be stopped, with consequent loss of productivity. The Applicant has also observed that in the known devices, the movement of the two edges after the cutting, i.e. of the cut piece and the remaining part of the elongated element still partially wound in a reel, can lead to a damaging deformation (stretching or longitudinal compression) of the same.

The Applicant has also observed that the abovementioned deformation can cause an incorrect spatial positioning of the elongated element on the forming drum.

In such context, it is the object of the invention to automatically cut the elongated elements in a precise, repeatable and constant manner, and to move such elongated elements without deforming them and without altering the design characteristics thereof, in order to correctly deposit the elongated elements on the forming drum in a manner so as to build high-quality tyres, with uniform structural characteristics along the circumferential extension thereof.

### Summary of the invention

The Applicant has found that such objective can be obtained by means of a cutting group wherein, during the cutting, both portions of the continuous elongated element placed on opposite sides of the cutting line are abutted against an abutment surface and retained thereto by elements that are arranged on top in a manner so as to prevent the lifting of the portions due to the action of the cutting blade; such elements are preferably also capable of retaining and transporting said portions after having executed the cutting. This objective is preferably obtained by employing a pair of grip elements, each having a lower end for coupling to the elongated element, independently movable from each other along a direction orthogonal to an upper surface of the elongated element and jointly movable along a direction parallel to the feed direction of said elongated element.

More specifically, according to one aspect, the present disclosure relates to a method for cutting an elongated element in a process for manufacturing tyres for vehicle wheels, comprising: retaining two portions of the elongated element arranged on opposite sides of a transverse cutting line on an abutment surface in a manner so as to oppose, substantially preventing, a movement with respect to said abutment surface of said two portions while said elongated element is cut along said transverse cutting line.

According to claim 1, the present invention relates to a process for manufacturing tyres for vehicle wheels, comprising:
- forming components of a green tyre on a forming drum,
- shaping, moulding and vulcanising the tyre;
wherein forming at least one of the components of the green tyre comprises:
supplying an elongated element made of elastomeric material along a feed path, wherein the elongated element is longitudinally extended along said feed path; cutting a piece from a head section of the elongated element;
advancing the piece on a conveyor up to a forming drum;
depositing said piece on a radially outer surface of the forming drum;
wherein cutting comprises:
   depositing, between an abutment surface and a coupling surface that are opposite each other, each of two portions of the elongated element situated on opposite sides of a transverse cutting line in order to oppose, substantially preventing, a movement of the elongated element with respect to said abutment surface and/or said coupling surface;
   cutting the elongated element along said transverse cutting line while said two portions are arranged between said abutment surface and said coupling surface. According to claim 10, the present invention relates to an apparatus for manufacturing tyres for vehicle wheels, comprising:
      at least one building line of a green tyre on a forming drum;
      at least one unit for shaping, moulding and vulcanising of the built green tyre; wherein the building line comprises:
         - at least one device for supplying an elongated element made of elastomeric material;
         - at least one forming drum adapted to receive said elongated element on a radially outer surface;
         - at least one conveyor for making the elongated element advance towards the forming drum, wherein the supply device and the conveyor delimit a feed path and define a feed direction;
            at least one cutting group of the elongated element interposed between the supply device and the conveyor;
            wherein the cutting group comprises:
            an abutment surface for the abutment of the elongated element;
            a cutting device operatively active at the abutment surface;
            a first grip element placed downstream of the cutting device and having a first coupling surface directed towards the abutment surface;
            a second grip element placed upstream of the cutting device and having a second coupling surface directed towards said abutment surface;
            wherein the first grip element and the second grip element are movable between a first position close to the feed path, in order to oppose, substantially preventing, a movement of the elongated element with respect to said abutment surface and/or to said first and/or second grip element, and a second position spaced from said feed path. The Applicant has verified that the retention action preferably exerted by the grip elements on the two portions of the elongated element arranged on opposite sides of the transverse cutting line substantially prevents material from being lifted or lowered, deformed or curled while it is cut and ensures that the effective cutting line and the consequent shape of the cut edges meet the design characteristics.

The present invention, in at least one of the aforesaid aspects, can have one or more of the preferred characteristics that are described hereinbelow.

Preferably, the elongated element comprises a plurality of reinforcement cords arranged parallel to each other and inclined with respect to the longitudinal direction of said elongated element.

Preferably, the angle formed between each reinforcement cord and said longitudinal direction is different from 90°, more preferably comprised between about 15° and about 60°, more preferably between about 20° and about 50°, for example equal to about 45°.

Such elongated element type is used, for example, for manufacturing bead reinforcement layers (flippers) and/or bead protection layers (chafers).

Preferably, the transverse cutting line is parallel to the reinforcement cords and arranged between two of said reinforcement cords.

Preferably, the transverse cutting line forms, with a feed direction of the elongated element, an angle different from 90°.

The retention action exerted on the abovementioned portions of the elongated element prevents the reinforcement cords from changing tilt during the cutting, and prevents the blade or another cutting element from blocking and/or damaging or cutting the cords.

In the case of metallic cords, which the cutting element would not be able to cut, the retention of the abovementioned portions ensures that the cutting is carried out between two adjacent cords and that the abovementioned portions are actually separated.

In the case of textile cords, which the cutting element would be able to cut, the retention of the abovementioned portions ensures the structure continuity of the separated piece and of the remaining elongated element.

Preferably, the cutting element of the cutting device is moved along the cutting line.

Preferably, each of the two portions of the elongated element rests on the abutment surface and the respective coupling surface, placed on top of the abovementioned portion, rests on said portion.

Preferably, each of the two portions of the elongated element is retained against the respective coupling surface placed on top of the abovementioned portion and rests on the abutment surface.

Preferably, the coupling surfaces press the respective portions against the abutment surface. Preferably, retaining comprises: exerting a pressure on said two portions against the abutment surface. Preferably, the pressure is exerted over the entire width of the elongated element.

In this manner, the locking of the two portions is stronger and the portions of the elongated element are maintained flattened against the abutment surface. Preferably, the pressure is exerted on each portion for a length of the elongated element comprised between about 50mm and about 200mm, more preferably comprised between about 100mm and about 150mm.

The surface on which the pressure is exerted is sufficiently extended so as to ensure a firm blocking.

In addition, particular zones and/or points of the elongated element with concentrated stresses/deformations are not generated.

Preferably, a band around the transverse cutting line is left free of said pressure. Preferably, each of the two portions of the elongated element rests on the abutment surface and the respective coupling surface, placed on top of the abovementioned portion, only grazes said portion.

Preferably, each of the two portions of the elongated element is retained against the respective coupling surface placed on top of the abovementioned portion and only grazes said abutment surface.

According to these preferred embodiments, the two portions are not compressed and it is prevented that they are ruined and/or remain stuck to the abutment surface and/or to the coupling surfaces.

Preferably, each of the coupling surfaces is at least as wide as the elongated element.

Preferably, during the cutting, each of the two portions of the elongated element is extended along a longitudinal extension direction of said elongated element for a length comprised between about 50mm and about 200mm, more preferably comprised between about 100mm and about 150mm.

Preferably, during the cutting, the two coupling surfaces delimit a cutting channel between them, such channel extended along said transverse cutting line for the passage of a cutting element.

Preferably, the first grip element and the second grip element, at least when they are both situated in the first position, delimit a channel between them for the passage of a cutting element of the cutting device.

In other words, while the grip elements retain the elongated element, a band of said grip element, arranged on both sides of the cutting line, remains free for allowing the execution of the cutting towards the elastomeric material. Such band also corresponds with a channel delimited between the first grip element and the second grip element towards which the cutting element moves while it executes the cutting.

Preferably, said band has a width comprised between about 10mm and about 30mm, more preferably comprised between about 15mm and about 20mm.

Preferably, during the cutting, the two coupling surfaces are placed at a mutual distance comprised between about 10mm and about 30mm, more preferably comprised between about 15mm and about 20mm.

Such sizes are sufficient for allowing the passage of the cutting element and, at the same time, allow maintaining the grip elements close enough to the cutting line, in a manner so as to prevent excessive deformations of the edges of the elongated element contiguous to said cutting line during the execution of the cutting itself.

Preferably, the first grip element and the second grip element, at least when they are both situated in the first position, have facing parallel edges.

In this manner, the stresses and the deformations of the elongated element around the cutting line during the execution of the cutting itself are substantially homogeneous and distributed along the entire width of said elongated element.

Preferably, said edges are inclined with respect to the feed direction by an angle. Preferably, said angle is different from 90°, more preferably comprised between about 15° and about 60°, more preferably between about 20° and about 50°, for example equal to about 45°.

The tilt of the edges is equal to the tilt of the reinforcement cords present in the elongated element.

Preferably, each of the coupling surfaces of the first grip element and of the second grip element has a trapezoidal shape in plan view, preferably a right trapezoid.

Such shape reflects the plan form of the edges of the elongated element after the cutting.

Preferably, the first grip element and the second grip element have at least one substitutable part.

Preferably, each of the grip elements comprises a coupling element bearing the coupling surface and said coupling element can be substituted.

The coupling elements are substitutable in a manner so as to select those adapted for each type of elongated element. The shape and/or the size of the coupling elements are for example selected based on the size of the elongated element (width and/or thickness) and/or on the tilt of the reinforcement cords.

Preferably, after the cutting, each of said two portions is retained on the respective coupling surface and said coupling surfaces and said portions associated therewith are moved towards the conveyor.

Therefore, the coupling surfaces preferably perform two functions: that of retaining the elongated element during the cutting and that of conveying the two cut edges after the cutting.

Preferably, the first grip element and the second grip element each comprise suction devices that can be activated on command and in fluid communication with openings placed on the coupling surface in order to retain a respective portion of the elongated element.

The suction creates reduced pressure, distributed on the surface of the edges of the elongated element, which retains them without deforming them.

Preferably, each coupling surface is lifted together with the respective portion before moving it.

Preferably, the first grip element and the second grip element are brought into the second position together with the respective portions of the elongated element before moving them along the feed path.

In this manner, it is prevented to slide the two portions of the elongated element against the abutment surface during said movement.

Preferably, said coupling surfaces are moved together towards the conveyor. Preferably, said coupling surfaces are moved at the same speed towards the conveyor.

Preferably, the first grip element and the second grip element are movable together along a direction parallel to the feed direction.

The simultaneous movement allows reducing the cycle time and increasing the productivity.

Preferably, a first coupling surface of said two coupling surfaces placed downstream, with reference to a feed direction of the elongated element, is moved to above the conveyor.

The first coupling surface bears the respective portion (tail portion) of the cut piece to above the conveyor, In this manner, it is prevented that part of the piece which already rests on the conveyor drives the tail portion, with the risk of deforming it. Preferably, once above the conveyor, the first coupling surface releases the respective portion of the piece on said conveyor.

The entire piece now rests on the conveyor and can be advanced towards the forming drum without deformation risks.

Preferably, before releasing the respective portion, the first grip element is brought back into the first position.

In this manner, the tail of the piece is not left to fall but is set on the conveyor. Preferably, the first coupling surface is moved to above the conveyor while a support surface for said conveyor bearing the piece is advanced towards the forming drum.

Preferably, the first coupling surface is moved to above the conveyor at the same speed with which the support surface is advanced towards the forming drum. The synchronised movement of the first coupling surface and the conveyor allows maintaining the piece undeformed, since it is not stretched or compressed along its longitudinal extension.

Preferably, after the release of the respective portion of the piece from the first coupling surface, a second coupling surface of said two coupling surfaces placed upstream, with reference to a feed direction of the elongated element, is further moved in said feed direction.

After the piece has been brought to the forming drum and wound on said forming drum, the second coupling surface, which bears the head portion of the just-cut elongated element, is moved to above the conveyor.

Preferably, once above the conveyor, the second coupling surface releases the respective portion of the elongated element to be cut on said conveyor.

The elongated element now partly lies on the conveyor and partly on the abutment surface, ready to be cut once again.

Preferably, before releasing the respective portion, the second grip element is brought back into the first position.

The head of the elongated element is thus set on the conveyor and is not made to fall.

After the release, the conveyor is driven in order to make the elongated element advance a section corresponding to the length of the subsequent piece to be cut (placed to size).

Preferably, the first grip element and the second grip element each comprise blowing devices that can be activated on command and in fluid communication with openings placed on the coupling surface.

Preferably, at least one of the coupling surfaces of the first grip element and of the second grip element has at least one recess.

Preferably, the coupling surface of the second grip element has at least one recess.

Preferably, each of the coupling surfaces of the first grip element and of the second grip element has an anti-adherent covering comprising polymer material. These technical solutions serve to facilitate the detachment and the release of the respective portion of the elongated element from the grip element.

Preferably, the first grip element and the second grip element are movable between the first position and the second position in an independent manner with respect to each other.

This allows managing, with greater versatility, the movement of the portions of the elongated element retained thereby.

Preferably, the first and the second coupling surface are brought back and each of two successive portions of the elongated element situated on opposite sides of the transverse cutting line is arranged between the abutment surface and the respective coupling surface.

After having operated as conveyors, the first and the second coupling surface return to performing the function of retaining the elongated element during the cutting.

Preferably, the first and the second coupling surface are brought back together. Preferably, the first and the second coupling surface are brought back at the same speed.

The simultaneous movement allows reducing the time cycle and increasing the productivity.

Preferably, a cutting element placed between the coupling surfaces is moved together with said coupling surfaces.

Preferably, the cutting element is lifted before moving it together with said coupling surfaces along the feed direction.

Preferably, the cutting device is movable along a direction parallel to the feed direction together with the first grip element and the second grip element.

Since the cutting element is moved together with the coupling surfaces, there is no risk of possible interferences between these elements during the movement along the feed direction.

Preferably, the cutting group comprises a support frame, wherein the first grip element, the second grip element and the cutting device are mounted on said support frame.

Preferably, the support frame is movable along a direction parallel to the feed direction.

Preferably, the first grip element, the second grip element and the cutting device are integral with the support frame in the movement along a direction parallel to the feed direction.

The joint movement of the grip elements and the cutting device is obtained in a simple manner by constraining them to said support frame.

Preferably, the support frame is movable between a first position, wherein it lies above the abutment surface and a second position, wherein it lies above the conveyor.

The support frame carries out the function of conveying all the operative elements of the cutting group (grip elements and cutting device) along the feed direction. Preferably, the first grip element and the second grip element are movable with respect to the support frame between the first position and the second position. Preferably, also the cutting element of the cutting device is movable with respect to the support frame between a position of engagement with the elongated element, in order to cut it, and a position spaced from said elongated element (placed above the elongated element and/or on the side of the elongated element).

Preferably, the apparatus comprises a motor operatively connected to the conveyor and an actuator operatively connected to the support frame, wherein said motor and said actuator are electrically coupled in order to move said support frame and a movable surface of the conveyor together and at the same speed.

In this manner, the simultaneous motion is ensured of the movable surface of the conveyor and of the first coupling surface, which together carry the cut piece.

### Brief description of the drawings

Further characteristics and advantages will be more evident from the detailed description of a preferred but not exclusive embodiment of a method, of an apparatus and of a process for building tyres for vehicle wheels in accordance with the present invention.

Such description will be set forth hereinbelow with reference to the enclosed drawings, provided only for exemplifying and hence non-limiting purposes, in which:
- figure 1 shows a top schematic view of an apparatus for manufacturing tyres for vehicle wheels according to the present invention;
- figure 2 shows a side elevation view of an assembly belonging to the apparatus of figure 1;
- figure 3 shows an enlarged portion of the assembly of figure 2;
- figure 4 shows a top view, with some parts removed in order to better illustrate other parts, of the portion of figure 3;
- figures 5A and 5B respectively show a bottom view and a side section view of the portion of figures 3 and 4;
- figures 6A-6I show a partial view of the assembly of figure 2 in respective operating steps according to the present invention;
- figure 7 is a radial half-section of a tyre for vehicle wheels obtained with the process and the apparatus of the present invention.

### Detailed description of the preferred embodiments of the invention

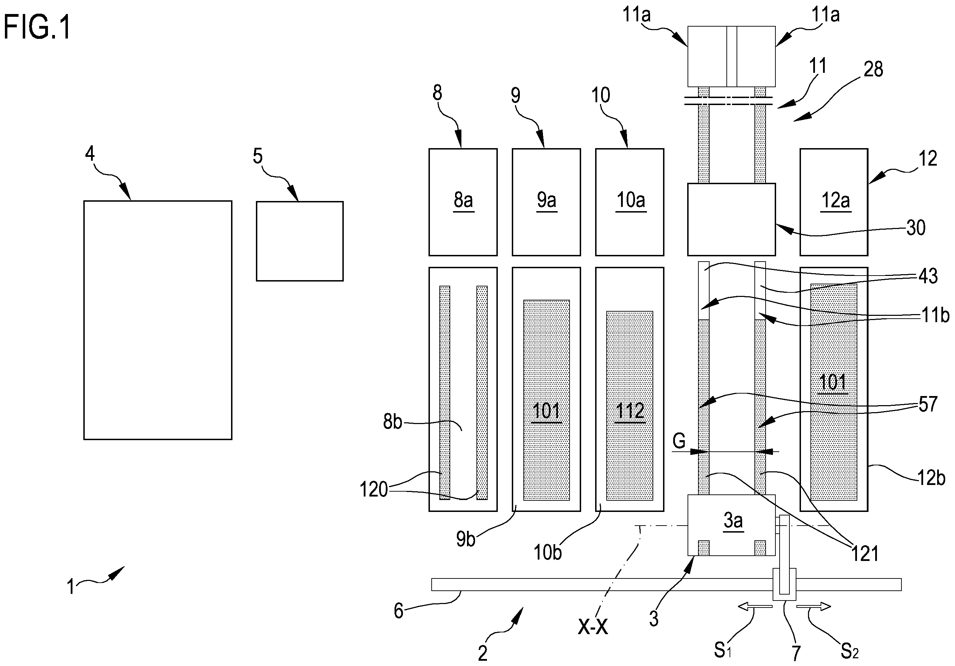

With reference to figure 1, reference number 1 indicates overall an apparatus for manufacturing tyres 100 for vehicle wheels in accordance with the present invention.

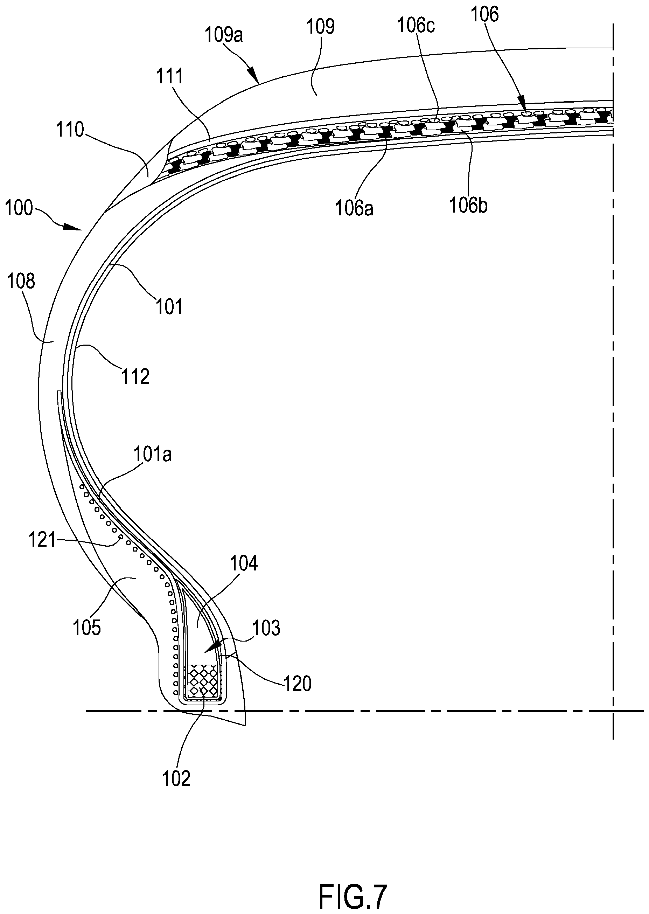

A tyre 100, obtained in said apparatus and according to the method and the process in accordance with the present invention, is illustrated in figure 7 and comprises at least one carcass structure, comprising at least one carcass layer 101 having respectively opposite end flaps engaged with respective annular anchoring structures 102, termed bead cores, possibly associated with a bead filler 104. The zone of the tyre comprising the bead core 102 and the bead filler 104 forms an annular reinforcement structure 103, the bead structure, intended for anchoring the tyre on a corresponding mounting rim, not illustrated.

The carcass structure is usually of radial type, i.e. the reinforcement elements of the at least one carcass layer 101 are situated on planes comprising the rotation axis of the tyre and substantially perpendicular to the equatorial plane of the tyre. Said reinforcement elements are generally constituted by textile cords, for example rayon, nylon and polyester.

Each bead structure is associated with the carcass structure by means of folding back the opposite lateral edges of the at least one carcass layer 101 around the annular anchoring structure 102 in a manner so as to form the so-called flaps of the carcass 101a.

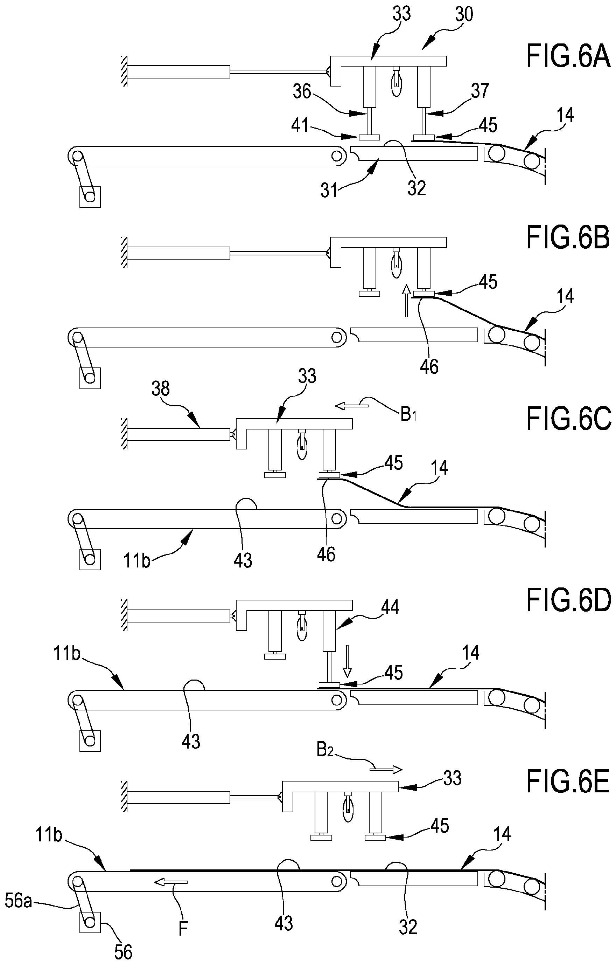

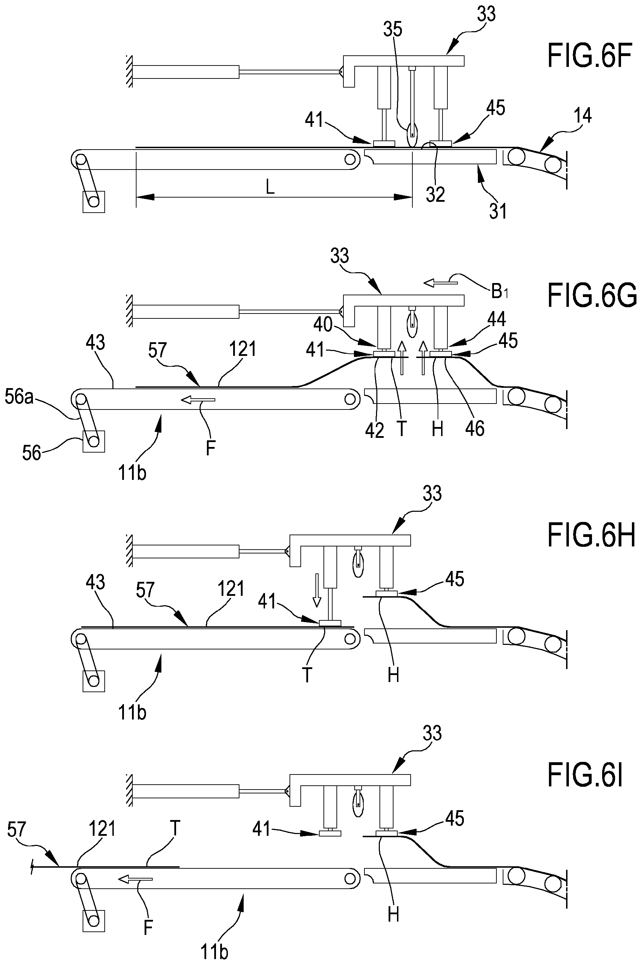

In one embodiment, the coupling between the carcass structure and the bead structure can be provided by means of a second carcass layer (not represented in Figure 6) applied in an axially outer position with respect to the first carcass layer. An anti-abrasive strip 105 made with elastomeric material is arranged in a position outside each bead structure 103.

The carcass structure is associated with a belt structure 106 comprising one or more belt layers 106a, 106b situated in radial superimposition with respect to each other and with respect to the carcass layer, having metallic or textile reinforcement cords. Such reinforcement cords can have crossed orientation with respect to a circumferential extension direction of the tyre 100. By "circumferential" direction it is intended a direction generically directed according to the rotation direction of the tyre. In radially outer position with respect to the belt layers 106a, 106b, at least one reinforcement layer at zero degrees 106c can be applied, commonly known as "0° belt", which generally incorporates a plurality of reinforcement cords, typically textile cords, orientated in a substantially circumferential direction, thus forming an angle of only a few degrees (for example an angle between about 0° and 6°) with respect to the equatorial plane of the tyre, and covered with an elastomeric material.

In radially outer position with respect to the belt structure 106, a tread band 109 is applied that is made of elastomeric compound, like all constituent semi-finished products of the tyre 100. On the lateral surfaces of the carcass structure, each being extended from one of the lateral edges of the tread 109 up to the respective bead structure 103, respective sidewalls 108 made of elastomeric compound are also applied in axially outer position. In radially outer position, the tread band 109 has a rolling surface 109a intended to come into contact with the ground. Circumferential grooves, which are connected by transverse notches in a manner so as to define a plurality of blocks of various shape and size distributed on the rolling surface 109a, are generally obtained in this surface 109a, which for the sake of simplicity is represented smooth in Figure 6.

An underlayer 111 may possibly be arranged between the belt structure 106 and the tread band 109. A strip constituted by elastomeric material 110, commonly known as "mini-sidewall", may possibly be present in the zone of connection between the sidewalls 108 and the tread band 109, this mini-sidewall generally being obtained by means of co-extrusion with the tread band 109 and allowing an improvement of the mechanical interaction between the tread band 109 and the sidewalls 108. Preferably the end portion of the sidewall 108 directly covers the lateral edge of the tread band 109.

In the case of tyres without air chamber, a rubber layer 112, generally known as "liner", which provides the necessary impermeability to the inflation air of the tyre, can also be provided in a radially inner position with respect to the carcass layer 101.

The rigidity of the tyre sidewall 108 can be improved by providing the tyre bead structure 103 with a reinforcement layer 120 generally known as "flipper" or additional strip-like insert. The "flipper" 120 is a reinforcement layer that is wound around the respective annular anchoring structure 102 and the bead filler 104 in a manner so as to at least partially surround them, said reinforcement layer being arranged between the at least one carcass layer 101 and the bead structure 103. Usually, the "flipper" is in contact with said at least one carcass layer 101 and said bead structure 103. The "flipper" 120 typically comprises a plurality of metallic or textile cords (e.g. made of aramid or rayon) incorporated in a cross-linked elastomeric material.

The tyre bead structure 103 can comprise a further protection layer that is generally known with the term "chafer" 121 or protection strip and which has the function of increasing rigidity and integrity of the bead structure 103. The "chafer" 121 usually comprises a plurality of cords incorporated in an elastomeric material. The cords are generally made of textile materials (e.g. aramid or rayon) or of metallic materials (e.g. steel cords).

The abovementioned components of the tyre 100 are obtained on one or more drums by moving said drums between different stations for supplying semi-finished products; at each station, suitable devices apply the aforesaid semi-finished products on the drum(s).

The apparatus 1, schematically illustrated in its entirety in the enclosed figure 1, comprises a carcass building line 2 at which forming drums 3 are moved between different stations for supplying semifinished products arranged to form, on each forming drum 3, a carcass sleeve comprising the carcass plies 101, the liner 112, the annular anchoring structures 102, the "flippers" 120, the "chafers" 121 and possibly at least one part of the sidewalls 108.

Simultaneously, in an outer sleeve building line 4, one or more auxiliary drums, not illustrated, are sequentially moved between different work stations arranged to form an outer sleeve on each auxiliary drum, comprising at least the belt structure 106, the tread band 109, and possibly at least one part of the sidewalls 108.

The apparatus further comprises an assembly station 5 at which the outer sleeve is coupled to the carcass sleeve, in order to define the built green tyre 100.

The built green tyres 100 are finally transferred to at least one unit for shaping, moulding and vulcanising, not illustrated.

The carcass building line 2 comprises (figure 1) a guide 6 that is preferably extended rectilinear along a deposition line. On the guide 6, a shuttle 7 is mounted that is capable of being moved by a suitable motor (not illustrated) along the guide 6 and in both travel senses "S1", "S2". The shuttle 7 is capable of supporting one forming drum 3 at a time and of making it rotate around a rotation axis "X-X" coinciding with the axis of longitudinal symmetry of the drum itself 3 and with the rotation axis of the tyre 100 being formed. In the illustrated embodiment, the drum 3 is projectingly borne by the shuttle 7, which comprises a grip element capable of retaining or releasing a terminal element of a central shaft of the forming drum 3. Alongside the guide 6 and preferably, according to that illustrated, on only one side thereof, deposition stations 8, 9, 10, 11, 12 are present that are arranged consecutively side-by-side one after the other.

Each deposition station 8, 9, 10, 11, 12 comprises a device 8a, 9a, 10a, 11a, 12a for supplying at least one elongated element 14 made of elastomeric material which is subsequently advanced on a conveyor 8b, 9b, 10b, 11b, 12b, preferably having a flat, downward-tilted transport surface. The elongated element 14 is longitudinally extended along a feed path and, preferably, at a certain point along said feed path it is cut to size (in pieces) according to a length corresponding with the circumferential extension of a radially outer surface 3a of said forming drum 3. According to that illustrated in figure 1, the carcass building line 2 has a deposition station 8 for two "flippers" 120, a deposition station 9 for one carcass ply 101, a deposition station 10 for the "liner" 112, a deposition station 11 for two "chafers" 121 and a deposition station 12 for a further possible carcass ply 101 .

A terminal end of each conveyor 8b, 9b, 10b, 11b, 12b is positioned close to the guide 6 in a manner such that the shuttle 7 and the drum 3 borne thereby can be arranged above said terminal end. The shuttle 7, being moved along the guide 6 (not necessarily according to the spatial succession of the deposition stations 8, 9, 10, 11, 12), is capable of bringing the drum 3 above each of the terminal ends of each conveyor 8b, 9b, 10b, 11b, 12b and to stop it in such position.

The shuttle 7 further comprises movement devices, non illustrated, adapted to move the grip element and the drum 3 constrained thereto vertically in two senses, along a direction orthogonal to a longitudinal extension of the guide 6. The drum 3 is therefore movable between a first position when its radially outer surface 3a is moved towards an upper transport surface of the conveyor 8b, 9b, 10b, 11b, 12b and a second position when such surface is moved away from said transport surface. The feed direction of the elongated element is perpendicular to a plane containing the rotation axis "X-X" at the point of winding on the drum 3.

The forming drum 3 is lowered until it is abutted against the elongated element cut to size (piece) and placed in rotation until it completely winds said cut-to-size elongated element on its radially outer surface 3a while the transport surface of the conveyor advances along the feed direction in a manner so as to accompany the winding. In this manner, at least some of the components of the green tyre 100 are formed.

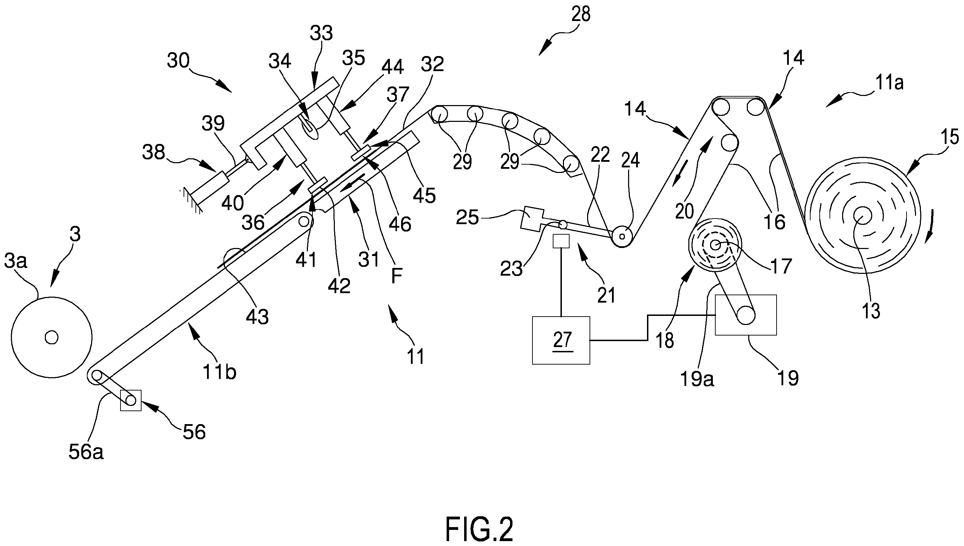

In the non-limiting illustrated embodiment, the deposition station 11 delimits two parallel feed paths, each provided with a supply device 11a and with a conveyor 11b. One of said two feed paths is illustrated in its entirety, together with all the devices that constitute it, in the side elevation view of figure 2. Hereinbelow, reference will be made to the single feed path and to the respective devices visible in figure 2.

The supply device 11a of the deposition station 11 comprises a reel holder 13 that receives, wound in a reel 15, a continuous elongated element 14 (intended to form, once cut to size, one of the "chafers" 121) supported by a support film 16. The elongated element 14 has a flattened shape with a width "I" substantially constant along its longitudinal extension and has two opposite lateral longitudinal edges 14a, 14b.

The supply device 11a further comprises an auxiliary reel holder 17 intended to receive, in an auxiliary reel 18, the support film 16 after the latter has been detached from the continuous elongated element 14.

The auxiliary reel holder 17 is operatively connected, for example by means of a belt transmission 19a or directly, to a drive motor 19.

The supply device 11a comprises a separation device 20 comprising one or more idle rollers, around each which the continuous elongated element 14 and/or the support film 16 are partially wound.

At said separation device 20, the support film 16 is separated from the continuous elongated element 14 and directed towards the auxiliary reel holder 17 while the elongated element 14 advances, free of the support film 16, towards a tightener 21.

The drive motor 19 acts directly on the auxiliary reel 18 and pulls the support film 16 which in turn drives the elongated element 14, causing the unrolling of the reel 15.

The advancing speed of the elongated element 14 along the feed path, in particular in the section between the reel 15 and the conveyor 11b, is governed by the drive motor 19.

The tightener 21 comprises a lever 22 oscillating around a pivot 23, with a transmission roller 24 at one end, on which the elongated element 14 is partially wound, and possible counterweights 25 on the opposite end. The elongated element 14 forms a loop around the transmission roller 24 and then continues its path towards the conveyor 11b. At said loop, the elongated element 14 is not abutted against any support surface.

An angular encoder 26, or other position sensor, is operatively active on the lever 22 in order to detect the angular position thereof that depends on the position of the transmission roller 24, the position of the loop and hence the length of the feed path of the elongated element 14.

The angular encoder 26 is connected to a control unit 27 in turn connected to the drive motor 19. The control unit 27 receives a signal from the angular encoder 26 which is a function of the length of the feed path of the elongated element 14 and commands the drive motor 19 in order to maintain the angular position of the tightener 21 (and hence the position of the idle roller 24 and the length of the feed path of the elongated element 14) within a pre-established range. In this manner, one controls the tension to which the elongated element 14 is subjected after the separation thereof from the support film16.

The deposition station 1 1 comprises a guide device 28 situated between the tightener 21 and the conveyor 11b adapted to support a section of the elongated element 14, which rolls and/or slides on top of support rollers 29.

Downstream of the guide device 28, a cutting group 30 is arranged which comprises a support element 31 having an abutment surface 32 interposed between the guide device 28 (placed upstream) and the conveyor 11b (placed downstream). The elongated element 14 coming from the guide device 28 rests on the abutment surface 32. Therefore, the abutment surface 32 partly defines the feed path of said elongated element 14.

A support frame 33 is arranged above the abutment surface 32 and bears a cutting device 34 provided with a cutting element 35. The cutting element 35 is hung under the support frame 33 and faces towards the abutment surface 32 and towards the elongated element 14 abutted against said abutment surface 32.

The cutting element 35, due to the suitable mechanisms (not illustrated) interposed between said cutting element 35 and the support frame 33, can be moved closer to the feed path and to the elongated element 14 in order to transversely incise and cut it. In the illustrated embodiment, the cutting element 35 is a circular blade which is, for example, movable along a direction orthogonal to the abutment surface 32 between a position close thereto and a spaced position. The circular blade 35 is also movable along a cutting line "S" parallel to the abutment surface 32 and inclined with respect to the feed direction "F" by a cutting angle "α". The cutting blade 35 is brought into the position close to the abutment surface 32 and then advanced along the cutting line "S" in order to cut said elongated element 14 from one longitudinal edge 14a up to an opposite longitudinal edge 14b.

The cutting can be executed along a line perpendicular to the feed direction "F" ("α"=90°) or along a line that is inclined with respect to a direction perpendicular to the feed direction "F". In the illustrated embodiment, the elongated element 14 is of the type provided with reinforcement cords "c" inclined by said angle "α", so that the cutting device 34 cuts the elongated element 14 along the cutting line "S" parallel to said cords "c" and interposed between two of said cords "c". For example, said angle "α" is comprised between about 15° and about 60°, for example equal to about 45°.

On the sides of the cutting element 35 and situated along the feed direction "F", a first grip element 36 placed downstream of the cutting device 34 and a second grip element 37 placed upstream of the cutting device 34 are positioned. Also both grip elements 36, 37 are installed on the support frame 33 and are hung below said support frame 33 and facing towards the abutment surface 32 and towards the elongated element 14. The support frame 33 is movable on suitable guides (not shown) along a direction "B1, B2" parallel to the feed direction "F" above the abutment surface 32 and also partially above the conveyor 11b. According to that illustrated in figure 2, such movement is obtained by means of an actuator 38, e.g. electro-cylinder or hydraulic cylinder, which has a rod 39 constrained to the support frame 33.

The first grip element 36 comprises a first actuator 40, such as an electro-actuated cylinder or a hydraulic or pneumatic cylinder having one end connected to the support frame 33 and an opposite end which bears a first coupling element 41. The first coupling element 41 has a first coupling surface 42 which is directed towards the elongated element 14 (when this is abutted against the abutment surface 32 and/or against a support surface 43 of the conveyor 11b). The first coupling element 41 is movable, by means of the action of the first actuator 40, between a first position and a second position, along a direction orthogonal to the abutment surface 32 and/or support surface 43.

In the first position, the first coupling element 41 lies in proximity to the abutment surface 32 and/or the support surface 43 of the conveyor 11b, i.e. in proximity to the feed path of the elongated element 14, and spaced from the upper portion of the support frame 33. In such first position, the first coupling surface 42 lies at a distance from the abutment surface 32 slightly greater than a thickness "t" of the elongated element 14 (not visible in the enclosed figures) and such to retain the elongated element 14 via the suction devices without pressing it against said abutment surface 32, in a manner so as to prevent ruining it.

In the second position, the first coupling element 41 lies spaced from the abutment surface 32 and/or from the support surface 43 of the conveyor 11b, i.e. spaced from the feed path of the elongated element 14, and closer to the upper portion of the support frame 33. In such second position, the first coupling surface 42 lies at a distance from the abutment surface 32 greater than the thickness "t" of the elongated element 14.

The second grip element 37 is structurally similar to the first grip element 36 and comprises a second actuator 44, such as an electro-actuated cylinder or a hydraulic or pneumatic cylinder, having one end connected to the support frame 33 and an opposite end that bears a second coupling element 45. The second coupling element 45 has a second coupling surface 46 directed towards the elongated element 14 (when this is abutted against the abutment surface 32 and/or on the conveyor 11b). Also the second coupling element 45 is movable, by means of the action of the second actuator 44, between a first position and a second position, along a direction orthogonal to the abutment surface 32 and/or support surface 43, i.e. parallel to the first coupling element 41.

In the first position, the second coupling element 45 lies in proximity to the abutment surface 32 and/or support surface 43 of the conveyor 11b, i.e. in proximity to the feed path of the elongated element 14, and spaced from an upper portion of the support frame 33. In such first position, the second coupling surface 46 lies at a distance from the abutment surface 32 slightly greater than a thickness "t" of the elongated element 14 (not visible in the enclosed figures) and such to retain the elongated element 14 via the suction devices without pressing it against said abutment surface 32, in a manner so as to prevent ruining it.

In the second position, the second coupling element 45 lies spaced from the abutment surface 32 and/or from the support surface 43 of the conveyor 11b, i.e. spaced from the feed path of the elongated element 14, and closer to the upper portion of the support frame 33. In such second position, the second coupling surface 46 lies at a distance from the abutment surface 32 greater than the thickness "t" of the elongated element 14.

The first actuator 40 and the second actuator 44 can be independently commanded, in order to separately move the first coupling element 41 and the second coupling element 45 between the respective first and the respective second position.

Given that they are both mounted on the support frame 33, the cutting element 35, the first coupling element 41 and the second coupling element 45 are movable together along the abovementioned direction "B1, B2" parallel to the feed direction "F".

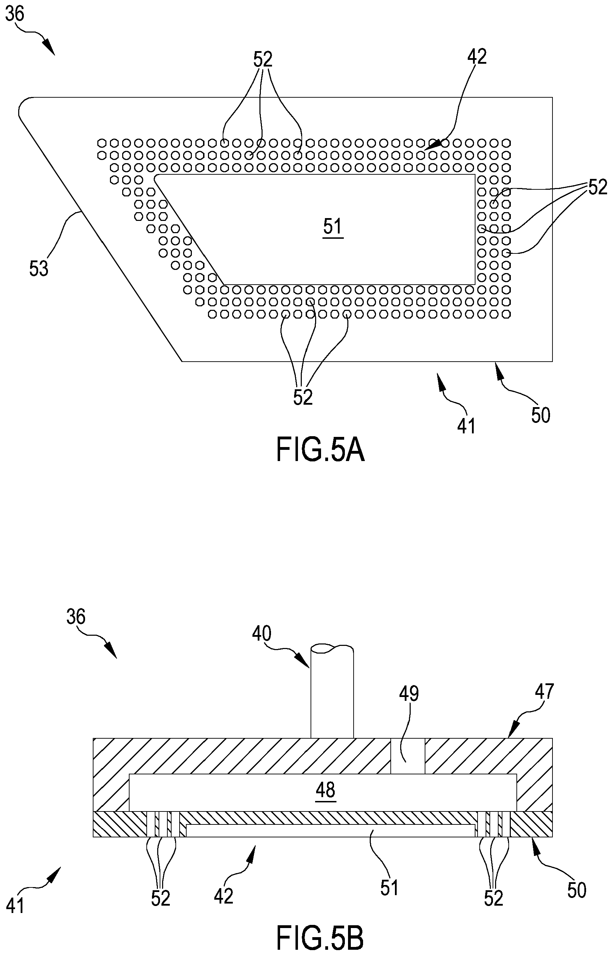

The first and the second coupling element 41, 45 have a structure substantially identical to each other, so that only the first coupling element 41 was illustrated in figures 5A and 5B.

The first coupling element 41 has a flattened shape with a right trapezoid plan form that is also the shape of the coupling surface 42. The first coupling element 41 comprises a main body 47 joined to the end of the first actuator 40 (figure 5B) and having a cavity 48 open towards one face of said main body 47 and in fluid communication, through a duct 49, with suction and blowing devices, not illustrated. A plate 50 closes the cavity 48 and bears said coupling surface 42. The plate 50 is provided with a central recess 51 defined in the coupling surface 42 and not communicating with the cavity 48, i.e. situated on the opposite side with respect to said cavity 48 (figure 5B), and with a plurality of through openings 52 (holes) that cross through the plate 50 and are opened towards the cavity 48 and on the coupling surface 42. Such holes 52 are arranged all around the recess 51. The coupling surface 42 is preferably covered with a layer of anti-adherent material, e.g. polymeric material.

The first coupling element 41 has a first inclined edge 53.

Also the second coupling element 45 has a flattened shape with a right trapezoid plan form (which is also the shape of the coupling surface 46) and comprises a main body 47 joined to the end of the second actuator 41 and having a cavity 48 open towards one face of said main body 47 and in fluid communication, through a duct 49, with suction and blowing devices, not illustrated. A plate 50 closes the cavity 48 and bears said coupling surface 46. The plate 50 is provided with a central recess 51 defined in the coupling surface 46 and not communicating with the cavity 48, i.e. situated on the opposite side with respect to said cavity 48, and with a plurality of through openings 52 that cross through the plate 50 and are opened towards the cavity 48 and on the coupling surface 46. Such holes 52 are arranged all around the recess 51. The coupling surface 46 is preferably covered with a layer of anti-adherent material, e.g. polymeric material. The first coupling element 41 has a second inclined edge 54.

In a non-illustrated embodiment, the plate 50 of the first coupling element 41 is not provided with the central recess 51 defined in the coupling surface 42 and said recess 51 is only present in the second coupling element 45.

The first and the second coupling element 36, 37 are installed on the support frame 33 with the first inclined edge 53 placed across from the second inclined edge 54. Said first and second inclined edges 53, 54 are actually mutually facing when the coupling elements 41, 45 are situated in the same position along the direction orthogonal to the abutment 32 and/or support 43 surfaces. The inclined edges 53, 54 are parallel to each other and are inclined, with respect to the feed direction "F", by the above-defined cutting angle "α".

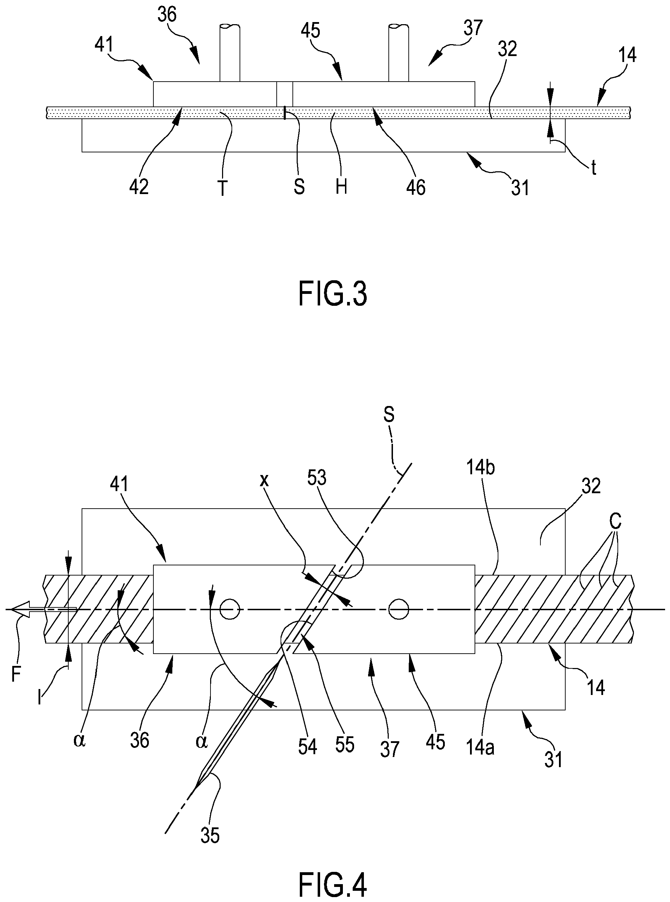

The inclined edges 53, 54 delimit a cutting channel 55 (figure 4) between them that is wide enough to allow the passage of the cutting blade 35. The cutting channel 55 has for example a width "x" comprised between about 15mm and about 20mm. The approached position of the first and the second coupling element 36, 37 is correctly represented in figures 3 and 4 while in figures 2 and 6A-6I such first and second coupling elements 36, 37 are schematically represented more spaced than they are according to the invention, in order to better illustrate their movements, as will be detailed hereinbelow.

The first and the second coupling element 41, 45 can be dismounted and substituted with other elements of different shape and size in order to be adapted to the size and characteristics of the elongated element to be cut. Furthermore, the plate 50 of different thickness can be mounted on the respective main bodies 47 (or the plate 50 can be mounted with the interposition of suitable thicknesses) in order to change the distance from the abutment surface 32 based on the thickness of the elongated element 14.

Downstream of the cutting group 30, the abovementioned conveyor 11b is situated. Such conveyor 11b is defined by a conveyor belt wound on a pair of rollers, and it has an upper branch that constitutes the support surface 43 for the abutment of the elongated element 14 cut to size (in a piece that constitutes the "chafer" 121). The conveyor 11b is moved by a motor 56 connected by means of a transmission 56a to one of the rollers of the conveyor 11b itself.

As specified above and as illustrated in figure 1, the deposition station 11 delimits two parallel feed paths, each provided with a supply device 11a, a cutting group 30 and a conveyor 11b. The upper branches 39 of the two conveyors 11b are parallel and have respective terminal ends placed below the forming drum 3. The distance "G" between said two conveyors 121 can be changed and adjusted on the basis of the axial position that the "chafers" 121 must assume on the forming drum 3.

During use, and in accordance with the method and the process of the present invention, the elongated element 14 of each of the feed paths, once separated from the support film 16, slides in abutment against the support rollers 29 of the guide device 28 and is carried with an intermittent motion to the cutting group 30. At the start of the cycle, a head end of the elongated element 14 lies on the abutment surface 32 retained by the second grip element 37. The support frame 33 is situated above the support element 31 and both the first and the second coupling element 41, 45 are in the first position thereof (figure 6A).

The first and the second coupling element 41, 45 are moved away from the abutment surface 32 while the second coupling element 45 retains, on the second coupling surface 46 thereof, the head end of the elongated element 14 by means of the suction actuated through the openings 52 of said coupling surface 46 (figure 6B).

The support frame 33 is moved along the direction "B1" parallel to and in accordance with the feed direction "F", until it reaches above the support surface 43 of the conveyor 11b, by means of the actuator 38 (figure 6C). The elongated element 14 is driven along the feed path by the second coupling element 45 that retains the head of said elongated element 14 and, simultaneously, the drive motor 19 causes the unrolling of a further section of the elongated element 14 from the reel 15.

Once it has reached above the conveyor 11b, the second actuator 44 provides to lower the second coupling element 45 until it is brought into the first position thereof, in a manner so as to abut the head of the elongated element 14 against the support surface 43 of the conveyor 11b while the latter is stopped (figure 6D). At this point (figure 6E), the suction actuated through the openings 52 is interrupted and/or air is blown through the same openings 52 in order to detach the head of the elongated element 14 from the coupling surface 46. Subsequently, the second coupling element 45 is moved away from the support surface 43 and the support frame 33 is moved along a direction "B2" parallel and opposite the feed direction "F" in order to bring it back above the abutment surface 32. Simultaneously, the motor 56 of the conveyor 11b is activated in order to make the support surface 43 and the elongated element 14 integrally abutted against the latter advance while the drive motor 19 causes the unrolling of a further section of the elongated element 14 from the reel 15.

Such advancing serves to carry the elongated element 14 downstream of the cutting line "S", placed at the abutment surface 32, by a length section "L" equal to the length of a subsequent piece 57 to be wound on the forming drum 3. Once such length "L" is defined (figure 6F), with the support frame 33 placed on top of the support element 31 and the conveyor 11b stopped, the first coupling element 41 and the second coupling element 45 are brought into the respective first positions in order to retain the elongated element 14 between the coupling surfaces 42, 46 and the abutment surface 32. For such purpose, the suction is activated through the respective through openings 52 (holes). Such position is illustrated in more detail in figures 3 and 4.

While the first coupling element 41 and the second coupling element 45 retain the two portions of the elongated element 14, the cutting element 35 passes between the first coupling element 41 and the second coupling element 45 towards the cutting channel 55 and cuts the elongated element 14 along the transverse cutting line "S" until it separates the two portions/edges that lie on opposite sides of said line "S". A tail portion "T" of the piece 57 just cut lies in contact with the first coupling element 41. A head portion "H" of the remaining elongated element 14 lies in contact with the second coupling element 45.

Once the transverse cutting has been completed, the first actuator 40 and the second actuator 41 are brought into the respective second positions and lift the tail portion "T" and the head portion "H" therewith, retaining them on the respective coupling surfaces 42, 46 by means of the suction through the respective through openings 52 (holes). The support frame 33 is advanced along a direction "B1" parallel to and in accordance with the feed direction "F" at the same speed with which the support surface 43 is moved along the feed direction "F", in a manner such that the entire piece 57 just cut is translated at the same speed (figure 6G). When the first coupling element 41 arrives above the support surface 43, the support frame 33 and the conveyor 11b are stopped and the first actuator 40 carries the first coupling element 41 in the first position thereof until it abuts the tail portion "T" against the support surface 43 while the second coupling element 41 retains the head portion "H" in the second lifted position thereof (figure 6H).

At this point, the first coupling element 41 releases the tail portion "T" (deactivating the suction and moving away) and the conveyor 11b can bring the piece 57 towards the forming drum and wind it thereof (figure 6I). At this point, the cycle can start again as in figure 6C.

## Claims

1. Process for manufacturing tyres for vehicle wheels, comprising:
- forming components of a green tyre (100) on a forming drum (3),
- shaping, moulding and vulcanising the tyre (100);
wherein forming at least one of the components of the green tyre (100) comprises:
supplying an elongated element (14) made of elastomeric material along a feed path, wherein the elongated element (14) is longitudinally extended along said feed path;
cutting a piece (57) from a head section of the elongated element (14);
advancing the piece (57) on a conveyor (11b) up to a forming drum (3);
depositing said piece (57) on a surface (3a) radially outer with respect to the forming drum (3);
wherein cutting comprises:
depositing, between an abutment surface (32) and a coupling surface (42, 46) that are opposite each other, each of two portions (T, H) of the elongated element (14) situated on opposite sides of a transverse cutting line (S) in order to oppose, substantially preventing, a movement of the elongated element (14) with respect to said abutment surface (32) and/or said coupling surface (42, 46);
cutting the elongated element (14) along said transverse cutting line (S) while said two portions (T, H) are arranged between said abutment surface (32) and said coupling surface (42, 46);
after the cutting, retaining each of said two portions (T, H) on the respective coupling surface (42, 46) and moving said coupling surfaces (42, 46) and said portions (T, H) associated therewith towards the conveyor (11b); wherein said coupling surfaces (42, 46) are moved together towards the conveyor (11b).

2. Process as claimed in claim 1, wherein each of the two portions (T, H) of the elongated element (14) rests on the abutment surface (32) and the respective coupling surface (42, 46), placed on top of the abovementioned portion (T, H), grazes said portion (T, H) or wherein each of the two portions (T, H) of the elongated element (14) is retained against the respective coupling surface (42, 46) placed on top of the abovementioned portion (T, H) and grazes said abutment surface (32).

3. Process as claimed in claim 1, wherein during the cutting the two coupling surfaces (42, 46) delimit a cutting channel (55) between them, such channel extended along said transverse cutting line (S) for the passage of a cutting element (35).

4. Process as claimed in claim 1, comprising: lifting each coupling surface (42, 46) together with the respective portion (T, H) before moving said coupling surface (42, 46).

5. Process as claimed in claim 1, wherein said coupling surfaces (42, 46) are moved at the same speed towards the conveyor (11b).

6. Process as claimed in claim 1, wherein a cutting element (35) placed between the coupling surfaces (42, 46) is moved together with said coupling surfaces (42, 46).

7. Process as claimed in claim 1, wherein a first coupling surface (42) of said two coupling surfaces (42, 46) placed downstream, with reference to a feed direction (F) of the elongated element (14), is moved to above the conveyor (11b) and, once above the conveyor (11b), the first coupling surface (42) releases the respective portion (T) of the piece (57) on said conveyor (11b).

8. Process as claimed in claim 10, wherein the first coupling surface (42) is moved to above the conveyor (11b) while a support surface (43) of said conveyor (11b) bearing the piece (57) is advanced towards the forming drum (3) and wherein the first coupling surface (42) is moved to above the conveyor (11b) at the same speed with which the support surface (43) is advanced towards the forming drum (3).

9. Process as claimed in claim 7, wherein, after the release of the respective portion (T) of the piece (57) from the first coupling surface (42), a second coupling surface (46) of said two coupling surfaces (42, 46) placed upstream, with reference to a feed direction (F) of the elongated element (14), is further moved in said feed direction (F) and wherein once above the conveyor (11b), the second coupling surface (46) releases the respective portion (H) of the elongated element (14) to be cut on said conveyor (11b).

10. Apparatus for manufacturing tyres for vehicle wheels, comprising:
at least one building line (2) for a green tyre (100) on a forming drum (3);
at least one unit for shaping, moulding and vulcanising the built green tyre (100);
wherein the building line (2) comprises:
- at least one device (11a) for supplying an elongated element (14) made of elastomeric material;
- at least one forming drum (3) adapted to receive said elongated element (14) on a radially outer surface (3a);
- at least one conveyor (11b) for making the elongated element (14) advance towards the forming drum (3), wherein the supply device (11b) and the conveyor (11a) delimit a feed path and define a feed direction (F);
at least one cutting group (30) for the elongated element (14) interposed between the supply device (11a) and the conveyor (11b);
wherein the cutting group (30) comprises:
an abutment surface (32) for the abutment of the elongated element (14);
a cutting device (34) operatively active at the abutment surface (32);
a first grip element (36) placed downstream of the cutting device (34) and having a first coupling surface (42) directed towards the abutment surface (32);
a second grip element (37) placed upstream of the cutting device (34) and having a second coupling surface (46) directed towards said abutment surface (32);
wherein the first grip element (36) and the second grip element (37) are movable between a first position close to the feed path, in order to oppose, substantially preventing, a movement of the elongated element (14) with respect to said abutment surface (32) and/or to said first and/or second grip element (36, 37), and a second position spaced from said feed path; wherein the cutting device (34) is movable along a direction (B1, B2) parallel to the feed direction (F) together with the first grip element (36) and the second grip element (37).

11. Apparatus as claimed in claim 10, wherein the first grip element (36) and the second grip element (37) are movable between the first position and the second position in an independent manner with respect to each other.

12. Apparatus as claimed in claim 10, wherein the cutting group (30) comprises a support frame (33), wherein the first grip element (36), the second grip element (37) and the cutting device (34) are mounted on said support frame (33).

13. Apparatus as claimed in claim 12, wherein the first grip element (36), the second grip element (37) and the cutting device (34) are integral with the support frame (33) in the movement along a direction (B1, B2) parallel to the feed direction (F).

14. Apparatus as claimed in claim 10, wherein the first grip element (36) and the second grip element (37), at least when they are both situated in the first position, have facing parallel edges (53, 54), wherein said edges (53, 54) are inclined with respect to the feed direction (F) by an angle (α).

15. Apparatus as claimed in claim 10, wherein each of the coupling surfaces (42, 46) of the first grip element (36) and the second grip element (37) has a trapezoidal shape in plan view.

16. Apparatus as claimed in claim 10 wherein at least one of the coupling surfaces (42, 46) of the first grip element (36) and of the second grip element (37) has at least one recess (51).

## Patentansprüche

1. Verfahren zur Herstellung von Reifen für Fahrzeugräder, umfassend:
- Bilden von Komponenten eines Rohreifens (100) an einer Formungstrommel (3),
- Zurichten, Formen und Vulkanisieren des Reifens (100); wobei das Formen zumindest einer der Komponenten des Rohreifens (100) umfasst:
Zuführen eines länglichen Elements (14) aus Elastomermaterial entlang eines Zuführpfads, wobei das längliche Element (14) sich der Länge nach entlang des Zuführpfads erstreckt;
Abschneiden eines Stücks (57) von einem Kopfabschnitt des länglichen Elements (14);
Vorschieben des Stücks (57) an einer Fördereinrichtung (11b) bis zu der Formungstrommel (3);
Ablegen des Stücks (57) auf einer Oberfläche (3a) radial außerhalb in Bezug auf die Formungstrommel (3);
wobei das Abschneiden umfasst:
Ablegen eines jeden von zwei Abschnitten (T, H) des länglichen Elements (14), die sich an entgegengesetzten Seiten einer querverlaufenden Schnittlinie (S) zwischen einer Anlagefläche (32) und einer Kopplungsfläche (42, 46), die einander entgegengesetzt sind, um im Wesentlichen eine Bewegung des länglichen Elements (14) in Bezug auf die Anlagefläche (32) und/oder die Kopplungsfläche (42, 46) zu verhindern;
Abschneiden des länglichen Elements (14) entlang der querverlaufenden Schnittlinie (S), während die zwei Abschnitte (T, H) zwischen der Anlagefläche (32) und der Kopplungsfläche (42, 46) angeordnet sind;
nach dem Abschneiden, Halten eines jeden der zwei Abschnitte (T, H) an der jeweiligen Kopplungsfläche (42, 46) und Bewegen der Kopplungsflächen (42, 46) und der Abschnitte (T, H), die diesen zugeordnet sind, zu der Fördereinrichtung (11b) hin; wobei die Kopplungsflächen (42, 46) zusammen zu der Fördereinrichtung (11b) hin bewegt werden.

2. Verfahren nach Anspruch 1, wobei jeder der zwei Abschnitte (T, H) des länglichen Elements (14) auf der Anlagefläche (32) ruht, und die jeweilige Kopplungsfläche (42, 46), die auf dem erwähnten Abschnitt (T, H) platziert ist, den Abschnitt (T, H) berührt, oder wobei jeder der zwei Abschnitte (T, H) des länglichen Elements (14) gegen die jeweilige Kopplungsfläche (42, 46) gehalten wird, die auf dem erwähnten Abschnitt (T, H) platziert ist und den Abschnitt (T, H) berührt.

3. Verfahren nach Anspruch 1, wobei während des Abschneidens die zwei Kopplungsflächen (42, 46) einen Schnittkanal (55) zwischen sich definieren, so dass der Kanal sich entlang der querverlaufenden Schnittlinie (S) für den Durchgang eines Schneidelements (35) erstreckt.

4. Verfahren nach Anspruch 1, umfassend die folgenden Schritte: Anheben jeder Kopplungsfläche (42, 46) zusammen mit dem jeweiligen Abschnitt (T, H), bevor die Kopplungsfläche (42, 46) bewegt wird.

5. Verfahren nach Anspruch 1, wobei die Kopplungsflächen (42, 46) mit derselben Geschwindigkeit zu der Fördereinrichtung (11b) hin bewegt werden.

6. Verfahren nach Anspruch 1, wobei ein Schneidelement (35), das zwischen den Kopplungsflächen (42, 46) platziert ist, zusammen mit den Kopplungsflächen (42, 46) bewegt wird.

7. Verfahren nach Anspruch 1, wobei eine erste Kopplungsfläche (42) der zwei Kopplungsflächen (42, 46) in Bezug auf eine Zuführrichtung (F) des länglichen Elements (14) stromabwärts platziert ist, über die Fördereinrichtung (11b) bewegt wird, und sobald sie über der Fördereinrichtung (11b) ist, die erste Kopplungsfläche (42) den jeweiligen Abschnitt (T) des Stücks (57) an der Fördereinrichtung (11b) freigibt.

8. Verfahren nach Anspruch 10, wobei die erste Kopplungsfläche (42) über die Fördereinrichtung (11b) bewegt wird, während eine Stützfläche (43) der Fördereinrichtung (11b), die das Stück (57) trägt, zu der Formungstrommel (3) hin vorgerückt wird, und wobei die erste Kopplungsfläche (42) mit derselben Geschwindigkeit über die Fördereinrichtung (11b) bewegt wird, mit der die Stützfläche (43) zu der Formungstrommel (3) hin bewegt wird.

9. Verfahren nach Anspruch 7, wobei, nach dem Freigeben des jeweiligen Abschnitts (T) des Stücks (57) von der ersten Kopplungsfläche (42) eine zweite Kopplungsfläche (46) der zwei Kopplungsflächen (42, 46), die in Bezug auf eine Zuführrichtung (F) des länglichen Elements (14) stromaufwärts platziert ist, weiter in die Zuführrichtung (F) bewegt wird, und wobei, sobald sie über der Fördereinrichtung (11b) ist, die zweite Kopplungsfläche (46) den jeweiligen Abschnitt (H) des länglichen Elements (14), der zu schneiden ist, an der Fördereinrichtung (11b) freigibt.

10. Vorrichtung (100) zur Herstellung von Reifen für Fahrzeugräder, umfassend:
zumindest eine Linie (2) zur Fertigung eines Rohreifens (100) an einer Formungstrommel (3);
zumindest eine Einheit zum Zurichten, Formen und Vulkanisieren des gefertigten Rohreifens (100);
wobei die Fertigungslinie (2) umfasst:
- zumindest eine Einrichtung (11a) zum Anliefern eines länglichen Elements (14) aus einem Elastomermaterial;
- zumindest eine Formungstrommel (3), die dazu geeignet ist, das längliche Element (14) an einer radial äußeren Fläche (3a) aufzunehmen;
- zumindest eine Fördereinrichtung (11b), um das längliche Element (14) zu der Formungstrommel (3) hin vorrücken zu lassen, wobei die Einrichtung zum Anliefern (11b) und die Fördereinrichtung (11a) einen Zuführpfad begrenzen und eine Zuführrichtung (F) definieren;
zumindest eine Schneidgruppe (30) für das längliche Element (14), die zwischen der Einrichtung zum Anliefern (11a) und der Fördereinrichtung (11b) angeordnet ist;
wobei die Schneidgruppe (30) umfasst:
eine Anlagefläche (32) für die Anlage des länglichen Elements (14);
eine Schneidvorrichtung (34), die an der Anlagefläche (32) wirksam und aktiv ist;
ein erstes Greifelement (36), das stromabwärts der Schneideinrichtung (34) angeordnet ist und eine erste Kopplungsfläche (42) aufweist, die zu der Anlagefläche (32) hin gerichtet ist;
ein zweites Greifelement (37), das stromaufwärts der Schneideinrichtung (34) angeordnet ist und eine zweite Kopplungsfläche (46) aufweist, die zu der Anlagefläche (32) hin gerichtet ist;
wobei das erste Greifelement (36) und das zweite Greifelement (37) zwischen einer ersten Position nahe dem Zuführpfad, um einer Bewegung des länglichen Elements (14) in Bezug auf die Anlagefläche (32) und/oder das erste und/oder zweite Greifelement (36, 37) zu widerstehen und im Wesentlichen zu verhindern, und
einer zweiten Position beabstandet von dem Zuführpfad zu bewegen; wobei die Schneidvorrichtung (34) entlang einer Richtung (B1, B2) parallel zu der Zuführrichtung (F) zusammen mit dem ersten Greifelement (36) und dem zweiten Greifelement (37) beweglich ist.

11. Vorrichtung nach Anspruch 10, wobei das erste Greifelement (36) und das zweite Greifelement (37) zwischen der ersten Position und der zweiten Position auf voneinander unabhängige Weise beweglich sind.

12. Vorrichtung nach Anspruch 10, wobei die Schneidgruppe (30) einen Tragrahmen (33) umfasst, wobei das erste Greifelement (36), das zweite Greifelement (37) und die Schneidvorrichtung (34) an dem Tragrahmen (33) montiert sind.

13. Vorrichtung nach Anspruch 12, wobei das erste Greifelement (36), das zweite Greifelement (37) und die Schneidvorrichtung (34) mit dem Tragrahmen (33) in der Bewegung entlang einer Richtung (B1, B2) parallel zu der Zuführrichtung (F) einteilig sind.

14. Vorrichtung nach Anspruch 10, wobei das erste Greifelement (36) und das zweite Greifelement (37), zumindest wenn sie sich beide in der ersten Position befinden, zueinander weisende Ränder (53, 54) aufweisen, wobei die Ränder (53, 54) in Bezug auf die Zuführrichtung (F) um einen Winkel (α) abgeschrägt sind.

15. Vorrichtung nach Anspruch 10, wobei jede der Kopplungsflächen (42, 46) des ersten Greifelements (36) und des zweiten Greifelements (37) eine Trapezform in der Draufsicht aufweist.

16. Vorrichtung nach Anspruch 10, wobei zumindest eine der Kopplungsflächen (42, 46) des ersten Greifelements (36) und des zweiten Greifelements (37) zumindest eine Vertiefung (51) aufweist.

## Revendications

1. Procédé de fabrication de pneus pour roues de véhicule, comprenant le fait :
- de former des composants d'un pneu cru (100) sur un tambour de formation (3),
- de façonner, mouler et vulcaniser le pneu (100) ;
dans lequel la formation d'au moins l'un des composants du pneu cru (100) comprend le fait :
de fournir un élément allongé (14) en matériau élastomère le long d'un trajet d'acheminement, où l'élément allongé (14) s'étend longitudinalement le long dudit trajet d'acheminement ;
de couper une pièce (57) à partir d'une section de tête de l'élément allongé (14) ;
de faire avancer la pièce (57) sur un transporteur (11b) jusqu'à un tambour de formation (3) ;
de déposer ladite pièce (57) sur une surface (3a) radialement extérieure par rapport au tambour de formation (3) ;
dans lequel la coupe comprend le fait :
de déposer, entre une surface de butée (32) et une surface de couplage (42, 46) qui sont opposées l'une à l'autre, chacune des deux parties (T, H) de l'élément allongé (14) situées sur des côtés opposés d'une ligne de coupe transversale (S) afin de s'opposer à, empêcher essentiellement, un mouvement de l'élément allongé (14) par rapport à ladite surface de butée (32) et/ou à ladite surface de couplage (42, 46) ;
de couper l'élément allongé (14) le long de ladite ligne de coupe transversale (S) tandis que lesdites deux parties (T, H) sont agencées entre ladite surface de butée (32) et ladite surface de couplage (42, 46) ;
après la coupe, de retenir chacune desdites deux parties (T, H) sur la surface de couplage respective (42, 46) et de déplacer lesdites surfaces de couplage (42, 46) et lesdites parties (T, H) associées à celles-ci vers le transporteur (11b) ; où lesdites surfaces de couplage (42, 46) sont déplacées ensemble vers le transporteur (11b).

2. Procédé tel que revendiqué dans la revendication 1, dans lequel chacune des deux parties (T, H) de l'élément allongé (14) repose sur la surface de butée (32) et la surface de couplage respective (42, 46), placée au-dessus de la partie précitée (T, H), effleure ladite partie (T, H) ou où chacune des deux parties (T, H) de l'élément allongé (14) est retenue contre la surface de couplage respective (42, 46) placée au-dessus de la partie précitée (T, H) et effleure ladite surface de butée (32).

3. Procédé tel que revendiqué dans la revendication 1, dans lequel, au cours de la coupe, les deux surfaces de couplage (42, 46) délimitent entre elles un canal de coupe (55), ce canal s'étend le long de ladite ligne de coupe transversale (S) pour le passage d'un élément de coupe (35) .

4. Procédé tel que revendiqué dans la revendication 1, comprenant le fait : de soulever chaque surface de couplage (42, 46) conjointement avec la partie respective (T, H) avant le déplacement de ladite surface de couplage (42, 46) .

5. Procédé tel que revendiqué dans la revendication 1, dans lequel lesdites surfaces de couplage (42, 46) sont déplacées à la même vitesse vers le transporteur (11b).

6. Procédé tel que revendiqué dans la revendication 1, dans lequel un élément de coupe (35) placé entre les surfaces de couplage (42, 46) est déplacé conjointement avec lesdites surfaces de couplage (42, 46).

7. Procédé tel que revendiqué dans la revendication 1, dans lequel une première surface de couplage (42) desdites deux surfaces de couplage (42, 46) placée en aval, en référence à une direction d'acheminement (F) de l'élément allongé (14), est déplacée jusqu'au-dessus du transporteur (11b) et, une fois au-dessus du transporteur (11b), la première surface de couplage (42) libère la partie respective (T) de la pièce (57) sur ledit transporteur (11b) .

8. Procédé tel que revendiqué dans la revendication 10, dans lequel la première surface de couplage (42) est déplacée jusqu'au-dessus du transporteur (11b) tandis qu'une surface de support (43) dudit transporteur (11b) portant la pièce (57) est avancée vers le tambour de formation (3) et où la première surface de couplage (42) est déplacée jusqu'au-dessus du transporteur (11b) à la même vitesse avec laquelle la surface de support (43) est avancée vers le tambour de formation (3).

9. Procédé tel que revendiqué dans la revendication 7, dans lequel, après la libération de la partie respective (T) de la pièce (57) de la première surface de couplage (42), une deuxième surface de couplage (46) desdites deux surfaces de couplage (42, 46) placée en amont, en référence à une direction d'acheminement (F) de l'élément allongé (14), est en outre déplacée dans ladite direction d'acheminement (F) et où une fois au-dessus du transporteur (11b), la deuxième surface de couplage (46) libère la partie respective (H) de l'élément allongé (14) à couper sur ledit transporteur (11b).

10. Appareil de fabrication de pneus pour roues de véhicule, comprenant :
au moins une ligne de construction (2) pour un pneu cru (100) sur un tambour de formation (3) ;
au moins une unité de façonnage, de moulage et de vulcanisation du pneu cru construit (100) ;
dans lequel la ligne de construction (2) comprend :
- au moins un dispositif (11a) pour fournir un élément allongé (14) en matériau élastomère ;
- au moins un tambour de formation (3) adapté pour recevoir ledit élément allongé (14) sur une surface radialement extérieure (3a) ;
- au moins un transporteur (11b) pour faire avancer l'élément allongé (14) vers le tambour de formation (3), où le dispositif de fourniture (11b) et le transporteur (11a) délimitent un trajet d'acheminement et définissent une direction d'acheminement (F) ;
au moins un groupe de coupe (30) pour l'élément allongé (14) interposé entre le dispositif de fourniture (11a) et le transporteur (11b) ;
dans lequel le groupe de coupe (30) comprend :
une surface de butée (32) pour la butée de l'élément allongé (14) ;
un dispositif de coupe (34) fonctionnellement actif au niveau de la surface de butée (32) ;
un premier élément de préhension (36) placé en aval du dispositif de coupe (34) et ayant une première surface de couplage (42) dirigée vers la surface de butée (32) ;
un deuxième élément de préhension (37) placé en amont du dispositif de coupe (34) et ayant une deuxième surface de couplage (46) dirigée vers ladite surface de butée (32) ;
dans lequel le premier élément de préhension (36) et le deuxième élément de préhension (37) sont mobiles entre une première position proche du trajet d'acheminement, afin de s'opposer à, empêcher essentiellement, un mouvement de l'élément allongé (14) par rapport à ladite surface de butée (32) et/ou audit premier et/ou deuxième élément(s) de préhension (36, 37), et une deuxième position espacée dudit trajet d'acheminement ; où le dispositif de coupe (34) est mobile le long d'une direction (B1, B2) parallèle à la direction d'acheminement (F) conjointement avec le premier élément de préhension (36) et le deuxième élément de préhension (37).

11. Appareil tel que revendiqué dans la revendication 10, dans lequel le premier élément de préhension (36) et le deuxième élément de préhension (37) sont mobiles entre la première position et la deuxième position de manière indépendante l'un par rapport à l'autre.

12. Appareil tel que revendiqué dans la revendication 10, dans lequel le groupe de coupe (30) comprend un cadre de support (33), où le premier élément de préhension (36), le deuxième élément de préhension (37) et le dispositif de coupe (34) sont montés sur ledit cadre de support (33).

13. Appareil tel que revendiqué dans la revendication 12, dans lequel le premier élément de préhension (36), le deuxième élément de préhension (37) et le dispositif de coupe (34) sont solidaires du cadre de support (33) lors du mouvement le long d'une direction (B1, B2) parallèle à la direction d'acheminement (F).

14. Appareil tel que revendiqué dans la revendication 10, dans lequel le premier élément de préhension (36) et le deuxième élément de préhension (37), au moins lorsqu'ils sont tous deux situés dans la première position, ont des bords parallèles en regard (53, 54), où lesdits bords (53, 54) sont inclinés par rapport à la direction d'acheminement (F) d'un angle (α) .

15. Appareil tel que revendiqué dans la revendication 10, dans lequel chacune des surfaces de couplage (42, 46) du premier élément de préhension (36) et du deuxième élément de préhension (37) a une forme trapézoïdale en vue en plan.

16. Appareil tel que revendiqué dans la revendication 10, dans lequel au moins l'une des surfaces de couplage (42, 46) du premier élément de préhension (36) et du deuxième élément de préhension (37) a au moins un évidement (51) .
